# EUROPEAN PATENT APPLICATION

(11) **EP 2 733 057 A2**
(43) Date of publication of application: **21.05.2014**
(21) Application number: 12759493.5
(22) Date of filing: 12.07.2012
(51) Int. Cl.: B62K 21/12, B62K 15/00

(54) **BICYCLE HANDLEBAR ASSEMBLY**

(30) Priority: 15.07.2011 ES 201131213; 27.02.2012 ES 201230293
(71) Applicant: Montero Basqueseaux, Joaquín, 20004 San Sebastian (ES)
(72) Inventor: Montero Basqueseaux, Joaquín, 20004 San Sebastian (ES)
(74) Representative: Curell Suñol S.L.P.
(86) International application number: PCT/ES2012/070531
(87) International publication number: WO 2013/011181

(57) **Abstract**

Bicycle handlebar set comprising : a lower part (9) of the power bar rotably mounted onto the chassis tube (6) that supports the front wheel; an upper part (2) of the power bar joined to the lower part (9) so that it can swing between a raised position and a collapsed position; a handlebar bar made up of two half bars (1) mounted on the end of upper part (2) so that they are collapsible towards the central plane of the handlebar set, being able to swing between a raised position and a collapsed position; and relating means that relate half bars (1) and lower part (9), configured so that they impose a biyective relationship between the collapsed position of upper part (2) and the collapsed position of half bars (1).

## Description

### Field of the invention

The invention applies to the field of bicycles, particularly to the field of folding bicycles.

More particularly, the invention relates to a bicycle handlebar set of the type comprising a power bar lower part rotably mounted on the chassis tube supporting the front wheel of the bicycle, a power bar upper part joined to said power bar lower part so that it can swing with respect to a collapsing axis perpendicular to the central plane of the handlebar set, between a raised position and a collapsed position, and a handlebar bar for controlling the bicycle, made up of two handlebar half bars mounted on the end of said power bar upper part so that they are collapsible towards said central plane of the handlebar set, being able to swing between a raised position and a collapsed position.

### State of the art

There is a great variety of systems for folding bicycle handlebars. The most widely used at present are based on a sideways collapse, combined with the rotation, of an integral set made up of the handlebar bar and an upper part of the power bar, without making a fold in the actual handlebar bar itself, so that in the collapsed position of said set the handlebar bar remains parallel to the main plane of the bicycle. Documents CN201784764U, WO2007023314A1 and US2010207352A1, for example, disclose different systems of this type.

Another known type of system, to which this invention relates particularly, consists in the handlebar bar being made up of two collapsible half bars, one for each handle. Generally, this type of system has the advantage that it requires less space for folding the handlebar. Document EP0026800B1 discloses a system of this type wherein the half bars collapse sideways towards the bicycle plane. Document ES2307028T3 discloses another system of this type, where the folding is done by rotating the front wheel of the bicycle backwards and then collapsing the two half bars towards the bicycle plane. Documents CN201534596U and CN201545127U disclose another system of this type, wherein the two half bars are coupled together, so that the collapsing thereof is done simultaneously by means of a rotary handle. Document CN201105790 also discloses another system of this type, wherein the two half bars are also coupled together, so that the collapsing thereof is done simultaneously by acting in this case on a lever, and said half bars are coupled also to a mechanism for blocking the articulation of the upper part of the power bar that prevents the collapsing of the latter when the half bars are in the unfolded position and which releases said collapse when the half bars are collapsed. In the system disclosed in these three last documents, the folding of the handlebar is done in two successive movements: first of all the user must collapse the half bars, by acting on a rotary handle or a lever, and then he must collapse the upper part of the power bar by acting on the latter.

### Disclosure of the invention

The aim of the invention is to provide a bicycle handlebar set of the type indicated at the beginning, which has the actual advantage of the systems wherein the handlebar is made up of two collapsible half bars, that is the advantage that less space is required to fold the handlebar, and that at the same time it is easier to fold than the known systems of this type. In particular, the invention proposes a system of this type that can be folded and unfolded by a user using a simple manoeuvre that can be done with one hand.

This aim is achieved by means of a bicycle handlebar set of the type indicated at the beginning, characterized in that it comprises relating means that relate the handlebar half bars and the lower part of the power bar, with said relating means being configured so that they impose a biyective relationship between the collapsing position of said upper part of the power bar and the collapsing position of said handlebar half bars. In other words that for each position of the handlebar half bar, in its collapsing trajectory towards the central plane of the handlebar set, there is one single position of the upper part of the power bar, in its collapsing trajectory with respect to an axis perpendicular to said central plane. So, to fold the handlebar the user only has to collapse the upper part of the power bar, which includes automatically collapsing the handlebar half bars. In reverse order, to unfold the handlebar the user only has to raise the upper part of the power bar again, whereby the handlebar half bars are raised automatically and remain in the position of use.

In some preferable embodiments, that provide a particularly robust and precise handlebar folding system, said relating means are made up of rods joining said handlebar half bars and said lower part of the power bar, with the upper end of said rods being joined to the corresponding handlebar half bar by means of an upper articulation that is arranged on said handlebar half bar at a distance from said central plane of the handlebar set, and with the lower end of said rods being joined to said lower part of the power bar by means of a lower articulation that is arranged in an offset position towards the front of the bicycle with respect to said collapsing shaft.

Preferably, the bicycle handlebar set according to the invention comprises a handle that is mounted on the upper part of the power bar and which drives, on the one hand, means for blocking the collapsing movement of the handlebar half bars with respect to said upper part of the power bar, that block the raised position of said handlebar half bars, and on the other hand, means for blocking the collapsing movement of said upper part of the power bar with respect to said lower part of the power bar. This arrangement provides great safety in the bicycle's position of use, that is, in the unfolded position of the handlebar, while allowing the user to easily start the handlebar folding operation, for which he only needs to act upon said handle, to unblock the collapsing movement of the half bars and the upper part of the power bar, and then collapse said upper part of the power bar, also causing the handlebar half bars to collapse. Also, this operation is facilitated by the fact that the user can hold the upper part of the power bar, and operate the collapse thereof, holding it with just one hand by said handle that serves as a handhold.

Preferably, said handle is a rotary handle mounted on the top end of said upper part of the power bar.

Preferably, said means for blocking the collapsing movement of the handlebar half bars are made up of hooks arranged on each side of said rotary handle and respective rings, arranged in said handlebar half bars, with which said hooks engage.

Preferably, said rotary handle is coupled to a rod that runs inside said upper part of the power bar, via coupling means configured so that the rotation of said handle implies a translation of said rod in the longitudinal direction thereof, and in that said means for blocking the collapsing movement of the upper part of the power bar are made up of the lower end of said rod and a hole, wherein said rod is inserted, arranged in a foot that is integral to said lower part of the power bar.

An improved bicycle handlebar set according to the invention is characterised in that the collapsing axis perpendicular to the central plane of the handlebar set is a first collapsing axis, and the relating means are made up of:
- a lower transverse bar mounted on said lower part of the power bar, forming a second collapsing axis perpendicular to the central plane of the handlebar set, with said second collapsing axis being arranged in an offset position with respect to said first collapsing axis, and transverse grooves formed at the bottom end of said handlebar half bars, in which the ends of said lower transverse bar are inserted, so that each of said handlebar half bars can rotate around its own longitudinal axis and can also swing around said second collapsing axis;
- an upper transverse bar that is integral with said upper part of the power bar, and helical grooves formed in said handlebar half bars, into which ends of said upper transverse bar are inserted;
so that when said upper part of the power bar swings with respect to said first collapsing axis, said handlebar half bars swing with respect to said second collapsing axis and, due to the offset position of both collapsing axes with respect to one another, said ends of the upper transverse bar move in the longitudinal direction of said handlebar half bars and, being guided in said helical grooves, cause the rotation of said handlebar half bars around their own longitudinal axis.

This improved configuration has the advantage, with respect to the embodiments described above, that it dispenses with the rods that join the handlebar half bars and the lower part of the power bar, with the biyective relationship between the collapsed position of the upper part of the power bar and the collapsed position of the handlebar half bars, being formed only by the way in which the actual upper part of the power bar, the lower part of said bar and the handlebar half bars are joined together. Thanks to this arrangement, greater set robustness is obtained. Also, the thus formed handlebar set allows for a design wherein the folding manoeuvre is particularly comfortable, thanks to the fact that the upper transverse bar can be sized so that it serves as a handle allowing the user to accompany the folding manoeuvre.

Preferably, said transverse grooves are through grooves, so that said ends of the lower transverse bar, which are inserted into said transverse grooves, pass through said handlebar half bars. Also, preferably, said helical grooves are through grooves, so that said ends of the upper transverse bar, that are inserted into said helical grooves, pass through said handlebar half bars. These preferred configurations further increase the robustness of the set.

In some preferred embodiments, a handle is provided that is mounted on the upper part of the power bar under the upper transverse bar and which acts upon blocking means that block the collapsing movement of said upper part of the power bar at least in each of the raised and collapsed positions, so that the activating of said handle produces the unblocking of said collapsing movement, and said handle is shaped so that it is activated by pulling it towards the upper transverse bar. This solution allows the user to very easily unblock the raised and collapsed positions of the upper part of the power bar, while accompanying the collapsing movement using the upper transverse bar as a handle.

The invention also covers other detail characteristics illustrated in the detailed description of an embodiment of the invention and in the accompanying figures.

### Brief description of the drawings

The advantages and characteristics of the invention can be appreciated from the following description wherein, in a non-limiting way with respect to the scope of protection defined in the claims, a preferred embodiment of the invention is explained, with reference to the accompanying figures.

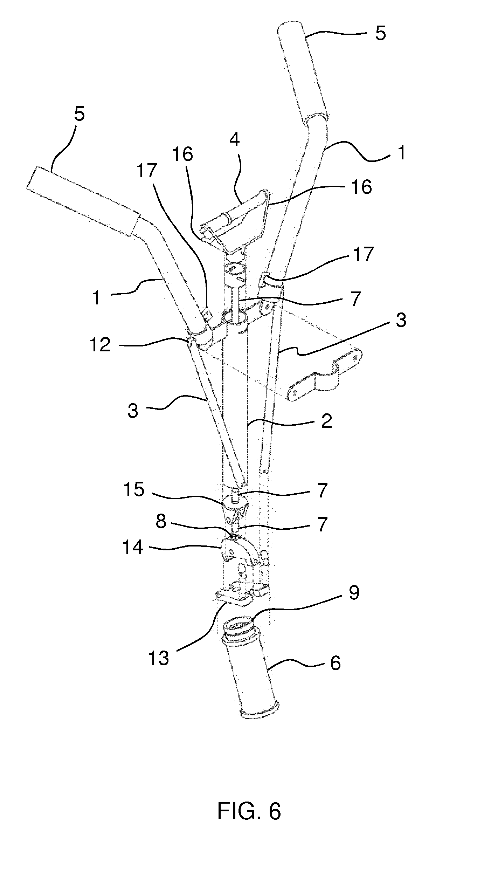

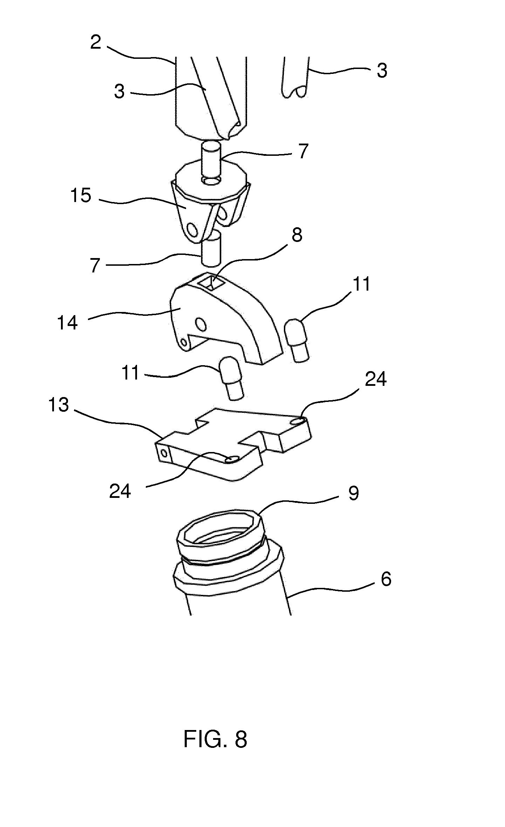

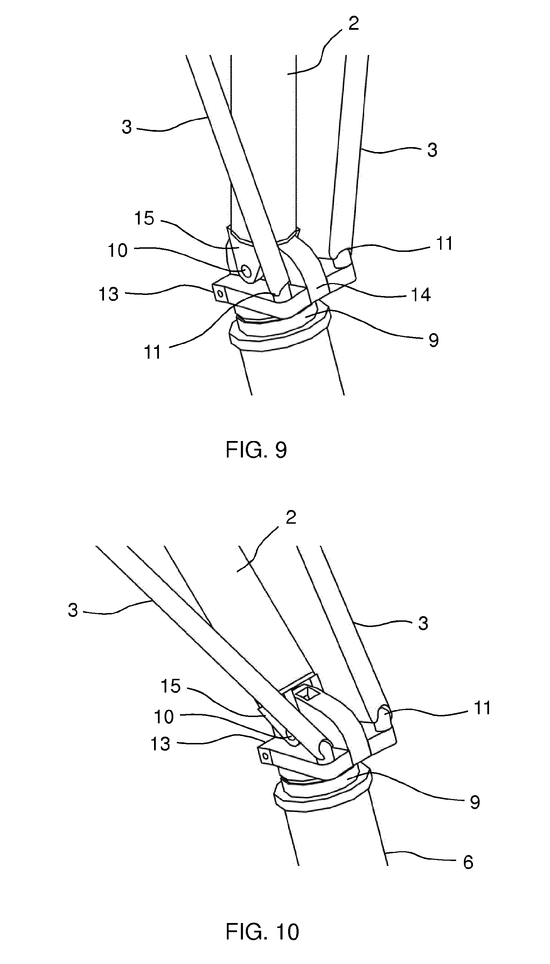

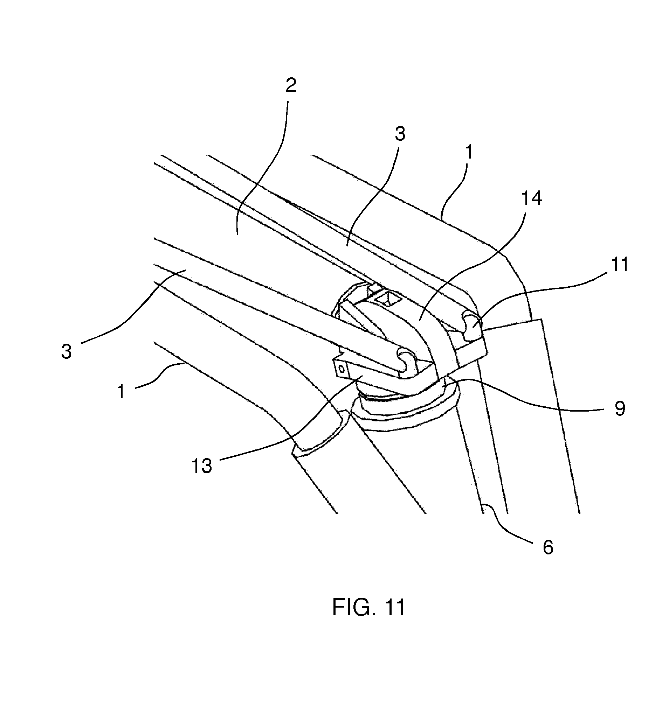

Figs. 1 to 11 show a first embodiment of the invention.
Fig. 1 is a perspective view of the handlebar set in the unfolded position, that is in the bicycle's position of use.
Fig. 2 is a perspective view of the handlebar set that illustrates the rotation of the blocking handle that allows the folding manoeuvre to start.
Fig. 3 is a perspective view of the handlebar set in an intermediate position during the folding manoeuvre.
Fig. 4 is a perspective view of the handlebar set in the folded position.
Fig. 5 is a side view of the front part of a bicycle fitted with the handlebar set.
Fig. 6 is an exploded perspective view of the handlebar set.
Fig. 7 is an enlarged view of the upper part in Fig. 6.
Fig. 8 is an enlarged view of the lower part of Fig. 6.
Figs. 9, 10 and 11 are enlarged views of Figs. 1, 3 and 4, respectively.
Figs. 12 to 17 show a second, improved embodiment of the invention.

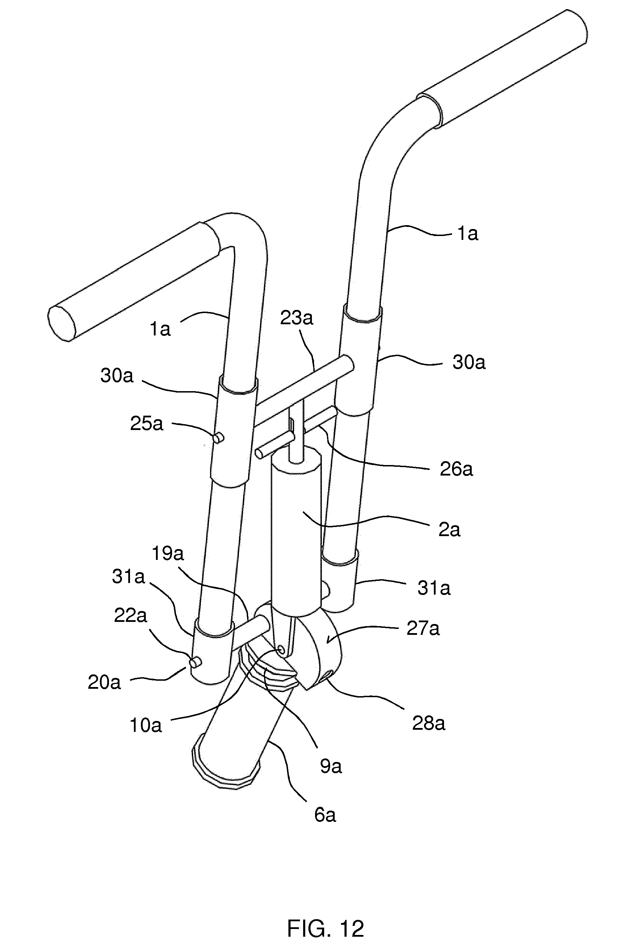

Fig. 12 is a perspective view of the handlebar set in the unfolded position, that is with the upper part of the power bar in the raised position.

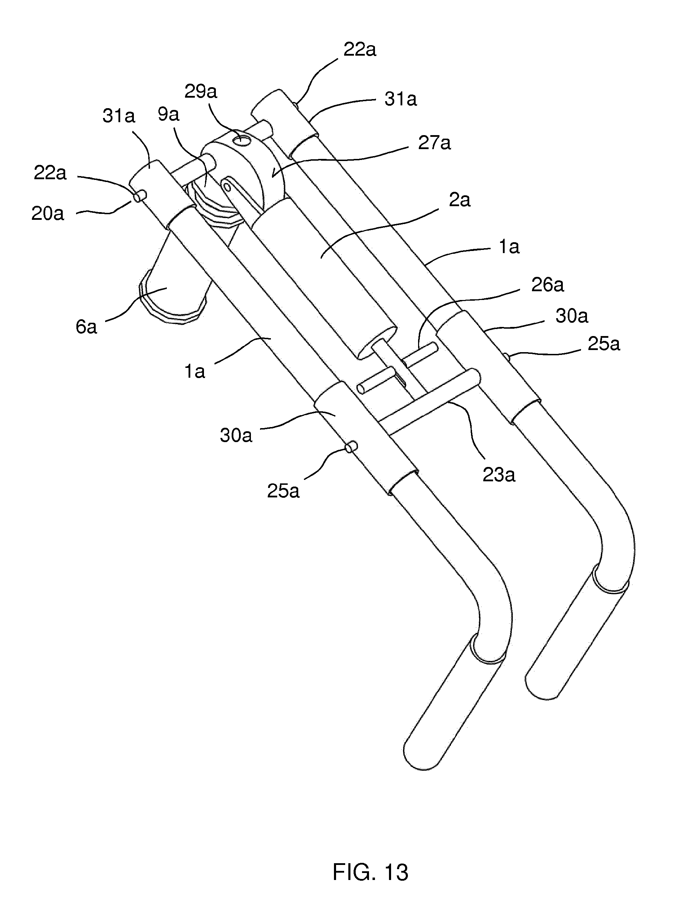

Fig. 13 is a perspective view of the handlebar set in the folded position, that is with the top part of the power bar in the collapsed position.

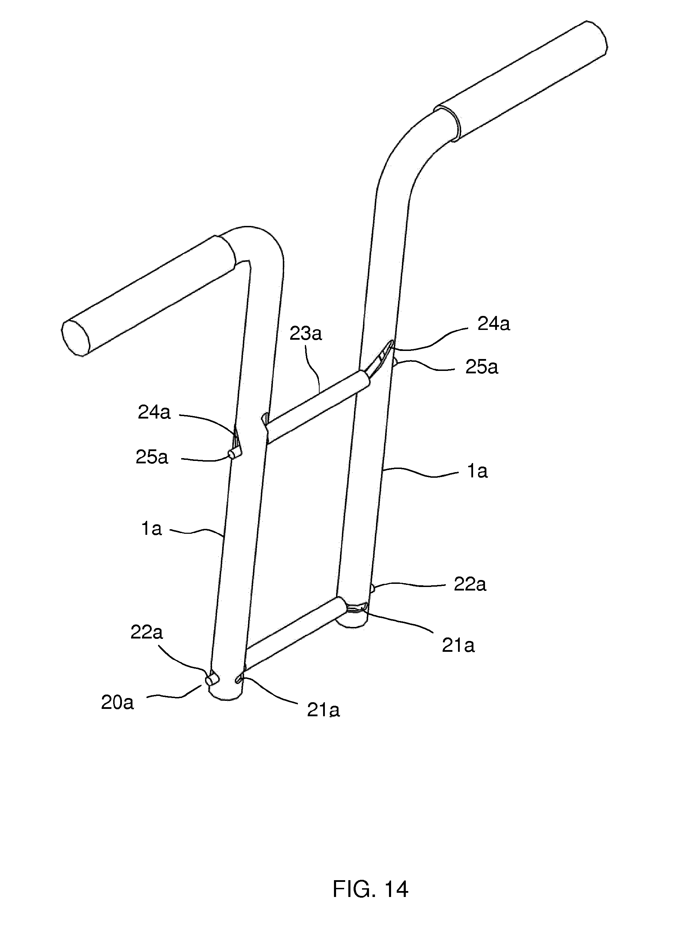

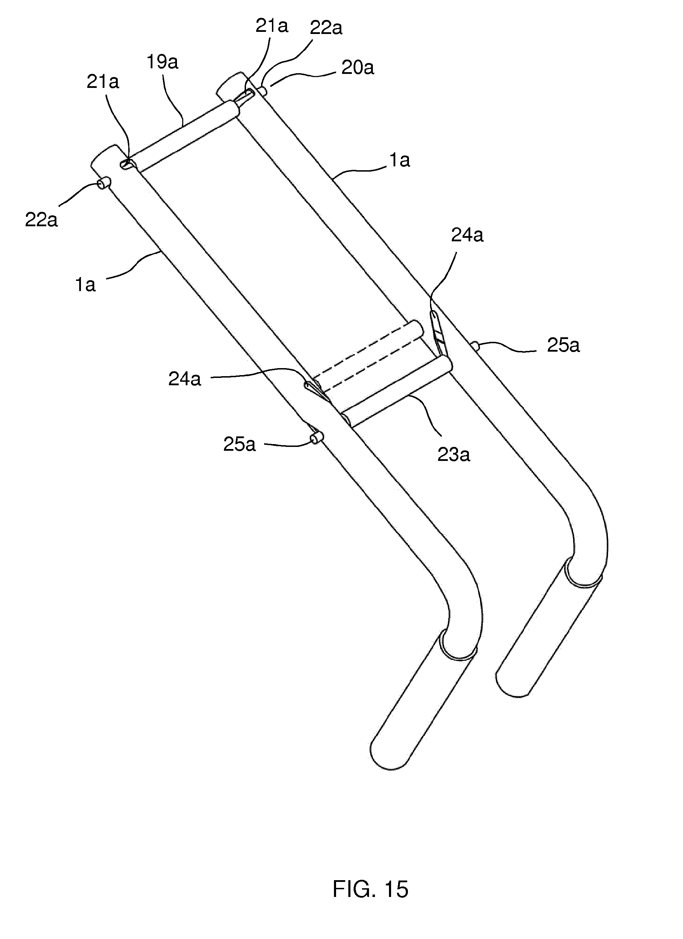

Figs. 14 and 15 are similar views to Figs. 12 and 13, respectively, where various elements of the handlebar set have been omitted artificially to show in greater detail the linking parts between the handlebar half bars and the lower and upper transverse bars.

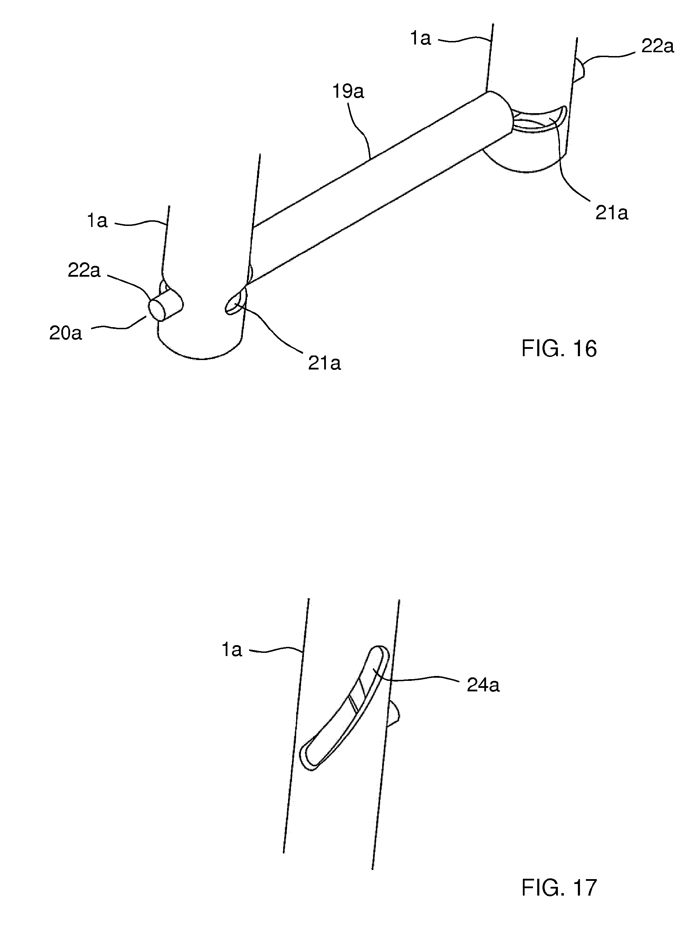

Fig. 16 is a detailed view showing the transverse grooves of the handlebar half bars, in which the ends of the lower transverse bar are inserted.
Fig. 17 is a detailed view showing the helical grooves of the handlebar half bars, in which the ends of the upper transverse bar are inserted.

### Detailed description of some embodiments of the invention

### First embodiment

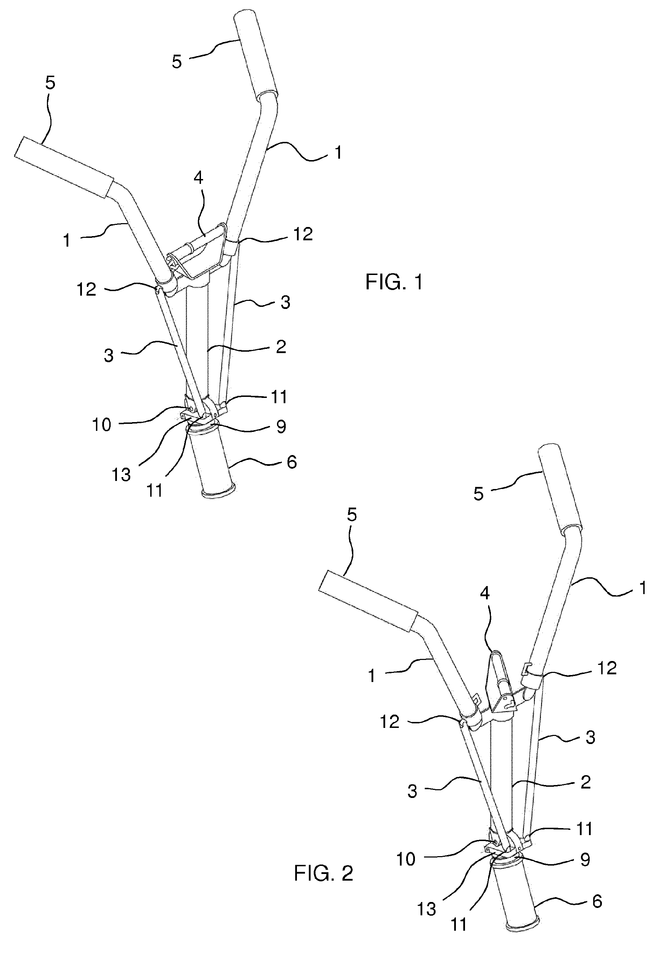

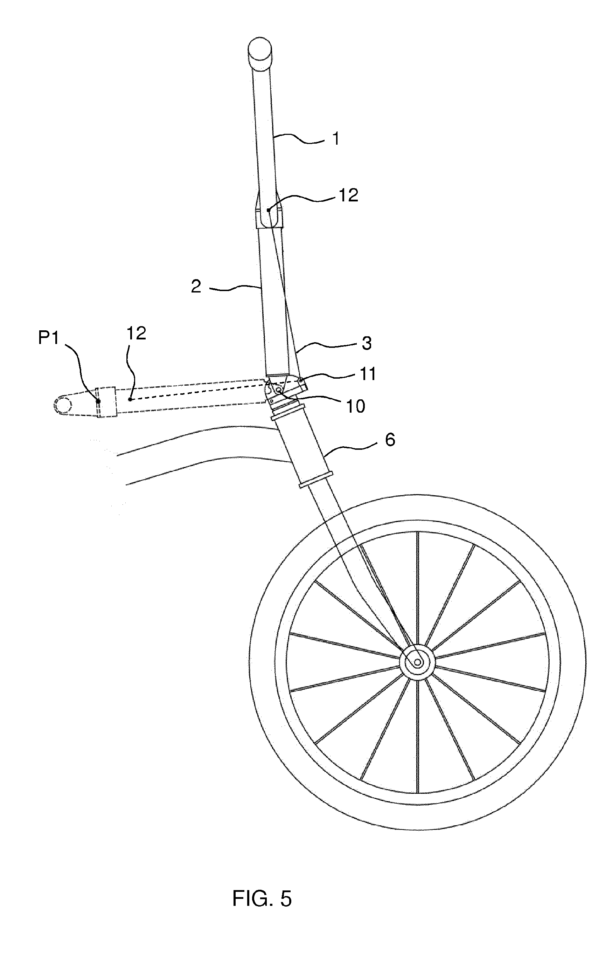

As can be seen in Figs. 1 to 4, the system according to the invention is based on a folding manoeuvre that consists in collapsing the handlebar set backwards, with respect to a rotation axis perpendicular to the central plane of the handlebar set, which implies automatically collapsing, towards said central plane, the two half bars forming the handlebar bar. This central plane of the handlebar set coincides with the central plane of the bicycle when the front wheel is arranged in said central plane of the handlebar set, as shown in Fig. 5.

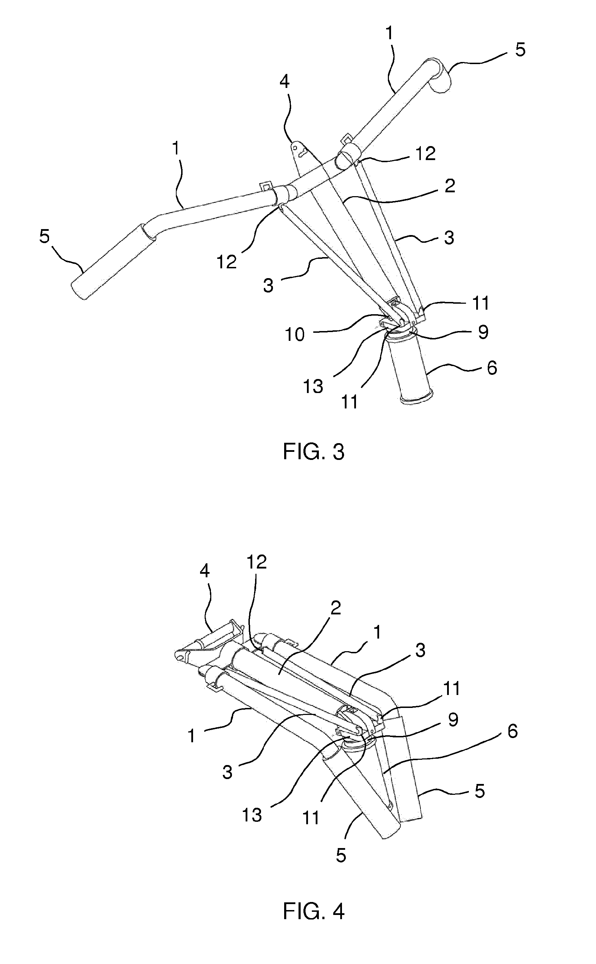

The handlebar set comprises:
- An upper part 2 of the power bar mounted in collapsible fashion on a lower part 9 of said power bar, so that said upper part 2 can swing with respect to a collapsing axis 10 between a raised position (Fig. 1) and a collapsed position (Fig. 4). Lower part 9 of the power bar is rotably mounted, in a known way, onto the chassis tube 6 of the bicycle supporting the front wheel. Collapsing axis 10 is perpendicular to the central plane of the handlebar set.
- Two handlebar half bars 1 that have at the end thereof a handlebar handle 5 and which together form the handlebar bar for controlling the bicycle. Handlebar half bars 1 are mounted on the end of upper part 2 of the power bar so that they are collapsible towards the central plane of the handlebar set, being able to swing between a raised position (Fig. 1) and a collapsed position (Fig. 4).
- Two rods 3 that join respectively handlebar half bars 1 and lower part 9 of the power bar. The upper end of each rod 3 is joined to the corresponding handlebar half bar 1 by means of an upper articulation 12 that is arranged on said handlebar half bar 1 at a distance from the central plane of the handlebar set that passes through upper part 2 of the power bar. The lower end of each rod 3 is joined to lower part 9 of the power bar by means of a lower articulation 11 that is arranged in an offset position towards the front of the bicycle with respect to collapsing axis 10 of upper part 2 of the power bar. The relative position between lower articulation 11 of rod 3 and collapsing axis 10 of upper part 2 of the power bar is visible in greater detail in Fig. 5, where it can be seen that the former is closer to the front of the bicycle than the latter.
- A handle 4 that is mounted on upper part 2 of the power bar and which drives, on the one hand, means 16, 17 for blocking the collapsing movement of handlebar half bars 1 with respect to upper part 2 of the power bar, which block the raised position of said handlebar half bars 1, and on the other hand, means 7, 8 for blocking the collapsing movement of upper part 2 of the power bar with respect to lower part 9 of the power bar.

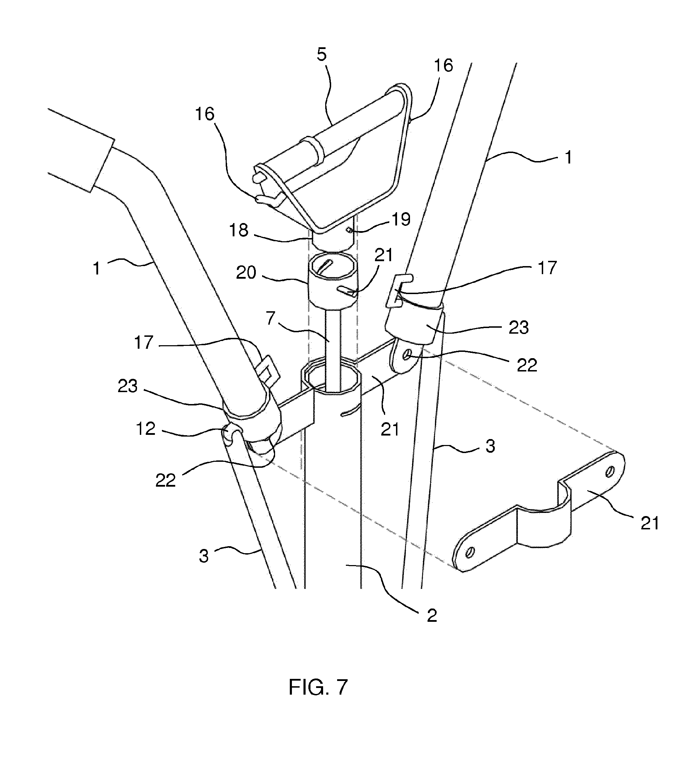

As can be seen in greater detail in Fig. 7, in upper part 2 of the power bar a flange 21 is attached, provided with side extensions where collapsing axes 22 of handlebar half bars 1 are arranged. Upper articulations 12 of rods 3 are made up of bases 23 that receive the lower ends of said half bars 1 and which are mounted swinging around said axes 22. These side extension of flange 21 keep said upper articulations 12 of rods 3 separate from the central plane of the handlebar set.

Handle 4 is rotably mounted on the end of the bar forming upper part 2 of the power bar and is coupled to a rod 7 that runs inside said upper part 2, so that the rotation of said handle 4 implies a translation of said rod 7 in the longitudinal direction thereof. To do this, handle 4 extends at the bottom by means of a cylindrical section 18 that is provided with a lug 19 and which fits inside a corresponding cylindrical section 20 provided with a helical groove 21 in which said lug 19 slides.

The means for blocking the movement of collapsing handlebar half bars 1 are made up of hooks 16 arranged on each side of handle 4 and respective rings 17 arranged on said half bars 1, so that in the unfolded position of the handlebar set (Fig. 1) hooks 16 engage firmly with rings 17, and they are released when handle 4 turns.

The lower end of rod 7 is provided with a fork 15 that is mounted astride a foot 14, swinging with respect to an axis that is arranged on said foot 14 and which constitutes said collapsing axis 10 of upper part 2 of the power bar. This foot 14 is joined to a support plate 13 which in turn is integral with the upper end of lower part 9 of the power bar.

The means for blocking the collapsing movement of upper part 2 of the power bar with respect to lower part 9 thereof are made up of the lower end of rod 7 and a hole 8 that is provided on the upper part of foot 14 and in which said rod 7 is inserted. When the lower end of rod 7 is inserted into hole 8, it blocks the collapsing movement of upper part 2 of the power bar. When the lower end of rod 7 comes out of said hole 8, by the translation of said rod 7 resulting from the rotation of handle 4, it releases said collapsing movement.

At the front end of said support plate 13 housings 24 are provided for the lower articulations 11 of rods 3, so that said lower articulations 11 are closer to the front of the bicycle than collapsing axis 10.

The system according to the invention operates as described below.

Starting from the bicycle's position of use (Fig. 1), wherein both the handlebar half bars 1 and upper part 2 of the power bar are in their raised position, the user rotates handle 4 (Fig. 2). This has the effect of unblocking both the collapsing movement of handlebar half bars 1 and the collapsing movement of upper part 2 of the power bar: hooks 16 are released from rings 17, and at the same time the lower end of rod 7 comes out of hole 8.

Then the user collapses upper part 2 of the power bar backwards. In order to carry out this collapsing action gradually, the user can advantageously use actual handle 4 to hold the handlebar set and fold and perform the folding with one hand. The movement of collapsing upper part 2 of the power bar automatically causes a movement of collapsing the handlebar half bars 1 towards the central plane (Figs. 3 and 4), thanks to the fact that rods 3 join handlebar half bars 1 in an articulated manner to upper part 2 of the power bar.

The side view of Fig. 5 shows with greater clarity how rods 3 work. As can be seen in the figure, lower articulation 11 of rod 3 is closer to the front of the bicycle than collapsing axis 10 of upper part 2 of the power bar. Due to this offset position, and since rods 3 are rigid, when upper part 2 of the power bar is collapsed backwards the distance between upper articulation 12 of each handlebar half bar 1 and collapsing axis 10 of said upper part 2 of the power bar is shortened, and this shortening can only occur by collapsing the handlebar half bars 1 towards the central plane. Point P1 shown in Fig. 5 shows the virtual position of upper articulation 12 which would correspond to the raised position. As can be seen, the position of upper articulation 12 in the collapsed position is closer to collapsing axis 10 than point P1.

Therefore, rods 3 establish a biyective relationship between the collapsed position of upper part 2 of the power bar and the collapsed position of the handlebar half bars 1.

Thanks to said biyective relationship, the manoeuvre for unfolding the handlebar set is carried out in reverse order to the folding manoeuvre and with the same ease: to move from the folded position (Fig. 4) to the position of use (Fig .1), the user only needs to raise upper part 2 of the power bar to its raised position, this way causing at the same time the unfolding of the handlebar half bars 1. As in the folding manoeuvre, the user can help himself advantageously by using handle 4 to carry out the operation comfortably with just one hand. When the unfolded position shown in Fig. 1 is reached, hooks 16 are engaged with rings17, therefore blocking the collapsing of half bars 1, and the lower end of rod 7 is inserted in hole 8, thereby blocking the collapsing of upper part 2 of the power bar.

### Second embodiment

As can be seen in Figs. 12 and 13, the manoeuvre for folding the handlebar set consists in collapsing said set backwards, with respect to a rotation axis perpendicular to the central plane of the handlebar set, which implies automatically collapsing, towards said central plane, the two half bars 1a forming the handlebar bar. This central plane of the handlebar set coincides with the central plane of the bicycle when the front wheel is arranged on said central plane of the handlebar set.

The handlebar set comprises:
- A lower part 9a of the power bar that is rotably mounted, in a known way, onto the chassis tube 6a of the bicycle that supports the front wheel.
- An upper part 2a of the power bar mounted in a collapsible way on the lower part 9a of the power bar, so that said upper part 2a can swing with respect to a first collapsing axis 10a perpendicular to the central plane of the handlebar set, between a raised position (Fig. 12) and a collapsed position (Fig. 13).
- Two tubular, cylindrical handlebar half bars 1a bearing at the end thereof a handlebar handle and which together form the handlebar bar for controlling the bicycle. The handlebar half bars 1a are joined together by means of a lower transverse bar 19a and an upper transverse bar 23a.

At their lower end, the handlebar half bars 1 a are inserted into respective blind, cylindrical bushings 31 a arranged on the ends of lower transverse bar 19a which, in turn, is joined to lower part 9a of the power bar. As can be seen in Figs. 14, 16 and 16, at the lower end of each handlebar half bar 1a, on the level of bushings 31 a, a through transverse groove 21 a is formed, in which a lug 22a, forming the end of said lower transverse bar 19a, is inserted. Each transverse groove 21 a extends in a circular arch of approximately three quarter circumference, in a plane perpendicular to the axis of handlebar half bar 1 a, and lug 22a is sized so that it passes through said handlebar half bar 1a via said transverse groove 21 a. The axis of lower transverse bar 19a thus forms a second collapsing axis 20a, perpendicular to the central plane of the handlebar set and arranged in an offset position with respect to the first collapsing axis 10a, around which the two handlebar half bars 1a can swing. Also, each of these handlebar half bars 1a can rotate around its own longitudinal axis, thanks to the fact that lug 22a can slide along transverse groove 21 a.

In an upper section, the handlebar half bars 1 a are inserted into respective open, cylindrical bushings 30a, with respect to which they can slide in the longitudinal direction. Bushings 30a are arranged at the ends of upper transverse bar 23a, with which the end of upper part 2a of the power bar is integral. As can be seen in Figs. 14, 15 and 17, in the handlebar half bars 1 a, on the level of bushings 30a, a through helical groove 24a is formed, in which a lug 25a, forming the end of upper transverse bar 23a, is inserted. Helical groove 24a is made up of two sections on one and the other side of the handlebar half bar 1 a, so that lug 25a passes through said handlebar half bar 1 a via said helical groove 24a and can slide along it. When upper part 2a of the power bar swings with respect to the first collapsing axis 10a, handlebar half bars 1a swing with respect to the second collapsing axis 20a. Due to the offset position of both collapsing axes 10a, 20a, lugs 25a move with respect to handlebar half bars 1 a in the longitudinal direction thereof. Fig. 15, which corresponds to the collapsed position, shows in dotted lines the location of upper transverse bar 23a that corresponds to the raised position in Fig. 12. Since lugs 25a are guided in helical grooves 24a, their movement in the longitudinal direction of the handlebar half bars 1a causes said half bars to rotate around their own longitudinal axis.

This way a biyective relationship is established between the collapsing position of upper part 2a of the power bar and the collapsing position of the handlebar half bars 1 a towards the central plane of the handlebar set.

The handlebar set also comprises means for blocking the collapsing movement of upper part 2a of the power bar at least in the raised position and in the collapsed position. These blocking means are made up of a circular, sliding surface 27a formed in lower part 9a of the power bar, provided with respective orifices 28a, 29a, and a bolt (not shown in the drawings) that emerges from the lower end of upper part 2a of the power bar, so that it is facing said sliding surface 27a. The bolt is urged permanently by a spring towards its exit position. When upper part 2a of the power bar is in the raised and collapsed positions, respectively the bolt is facing orifices 28a and 29a, inserting itself automatically into them by the urging of the spring and thereby blocking said upper part 2a of the power bar in each of these positions.

In upper part 2a of the power bar, under upper transverse bar 23a, a handle 26a is mounted which is activated by pulling it towards said upper transverse bar 23a. Handle 26a is activated against the force of said spring that urges the bolt permanently and this implies a movement of withdrawing said bolt from orifice 28a or 29a, thereby unblocking the collapsing movement of upper part 2a of the power bar.

Therefore, to carry out the folding manoeuvre, from the unfolded position shown in Fig. 12 to the folded position shown in Fig. 13, with one hand the user grasps upper transverse bar 23a and, with his fingertips, pulls handle 26a to unblock the collapsing, and then accompanies the collapsing with his hand grasping upper transverse bar 23a. The unfolding movement is similar, but in reverse order.

## Claims

1. Bicycle handlebar set comprising;
- a lower part (9, 9a) of the power bar mounted rotably on the chassis tube (6, 6a) supporting the front wheel of the bicycle;
- an upper part (2, 2a) of the power bar joined to said lower part (9, 9a) of the power bar so that it can swing with respect to a collapsing axis (10, 10a) perpendicular to the central plane of the handlebar unit, between a raised position and a collapsed position;
- a handlebar bar for controlling the bicycle, made up of two handlebar half bars (1, 1 a) mounted on the end of said upper part (2, 2a) of the power bar so that they are collapsible towards said central plane of the handlebar set, being able to swing between a raised position and a collapsed position;
**characterized in that** it also comprises:
- relating means that relate said handlebar half bars (1, 1 a) and said lower part (9, 9a) of the power bar, said relating means being configured so that they impose a biyective relationship between the collapsing position of said upper part (2, 2a) of the power bar and the collapsing position of said handlebar half bars (1, 1 a).

2. Bicycle handlebar set according to claim 1, **characterized in that** said relating means are made up of rods (3) that link said handlebar half bars (1) and said lower part (9) of the power bar, with the upper end of said rods (3) being joined to the corresponding handlebar half bar (1) by means of an upper articulation (12) that is arranged on said handlebar half bar (1) at a distance from said central plane of the handlebar set, and with the lower end of said rods (3) being joined to said lower part (9) of the power bar by means of a lower articulation (11) that is arranged in an offset position towards the front of the bicycle with respect to said collapsing axis (10).

3. Bicycle handlebar set according to any of the claims 1 or 2, **characterized in that** it comprises a handle (4) that is mounted on said upper part (2) of the power bar and which drives, on the one hand, means (16, 17) for blocking the collapsing movement of said handlebar half bars (1) with respect to said upper part (2) of the power bar, which block the raised position of said handlebar half bars (1), and on the other hand, means (7, 8) for blocking the collapsing movement of said upper part (2) of the power bar with respect to said lower part (9) of the power bar.

4. Bicycle handlebar set according to claim 3, **characterized in that** said handle (4) is a rotary handle that is mounted on the upper end of said upper part (2) of the power bar.

5. Bicycle handlebar set according to claim 5, **characterized in that** said means for blocking the collapsing movement of the handlebar half bars (1) are made up of hooks (16) arranged on each side of said rotary handle (4) and respective rings (17), arranged on said handlebar half bars (1), with which said hooks (16) engage.

6. Bicycle handlebar set according to any of the claims 4 or 5, **characterized in that** said rotary handle (4) is coupled to a rod (7) that runs inside said upper part (2) of the power bar, via coupling means (18, 19, 20, 21) configured so that the rotation of said handle (4) implies a translation of said rod (7) in the longitudinal direction thereof, and **in that** said means for blocking the collapsing movement of upper part (2) of the power bar are made up of the lower end of said rod (7) and a hole (8), in which the latter is inserted, arranged on a foot (14) that is integral with said lower part (9) of the power bar.

7. Bicycle handlebar set according to claim 1, **characterized in that** said collapsing axis perpendicular to the central plane of the handlebar set is a first collapsing axis (10a), and said relating means are made up of:
- a lower transverse bar (19a) mounted on said lower part (9a) of the power bar, forming a second collapsing axis (20a) perpendicular to the central plane of the handlebar set, with said second collapsing axis (20a) being arranged in an offset position with respect to said first collapsing axis (10a), and transverse grooves (21 a) formed in the lower end of said handlebar half bars (1a), in which ends (22a) of said lower transverse bar (19a) are inserted, so that each of said handlebar half bars (1a) can rotate around its own longitudinal axis and can also swing around said second collapsing axis (20a);
- an upper transverse bar (23a) integral with said upper part (2a) of the power bar, and helical grooves (24a) formed in said handlebar half bars (1a), in which ends (25a) of said upper transverse bar (23a) are inserted;
so that when said upper part (2a) of the power bar swings with respect to said first collapsing axis (10a), said handlebar half bars (1a) swing with respect to said second collapsing axis (20a) and, due to the offset position of both collapsing axes (10a, 20a) with respect to one another, said ends (25a) of the upper transverse bar (23a) move in the longitudinal direction of said handlebar half bars (1a) and, being guided in said helical grooves (24a), cause the rotation of said handlebar half bars (1a) around their own longitudinal axis.

8. Bicycle handlebar set according to claim 7, **characterized in that** said transverse grooves (21 a) are through grooves, so that said ends (22a) of lower transverse bar (19a), which are inserted in said transverse grooves (21 a), pass through said handlebar half bars (1a).

9. Bicycle handlebar set according to claims 7 or 8, **characterized in that** said helical grooves (24a) are through grooves, so that said ends (25a) of upper transverse bar (23a), which are inserted in said helical grooves (24a), pass through said handlebar half bars (1a).

10. Bicycle handlebar set according to any of the claims 7 to 9, **characterized in that** it comprises a handle (26a) that is mounted on said upper part (2a) of the power bar under said upper transverse bar (23a) and which activates means for blocking the collapsing movement of said upper part (2a) of the power bar at least in each of said raised and collapsed positions, so that the activating of said handle (26a) unblocks said collapsing movement, and **in that** said handle (26a) is shaped so that it is activated by pulling it towards said upper transverse bar (23a).
